# EUROPÄISCHE PATENTSCHRIFT

(11) **EP 2 674 652 B1**
(45) Veröffentlichungstag und Bekanntmachung des Hinweises auf die Patenterteilung: **31.12.2014**
(21) Anmeldenummer: 12004436.7
(22) Anmeldetag: 13.06.2012
(51) Int. Cl.: F16K 27/00, F16K 7/07

(54) **Ventilanordnung mit Quetschventilen**
Valve assembly with pinch valves
Agencement de soupape avec vannes à manchon

(43) Veröffentlichungstag der Anmeldung: 18.12.2013
(73) Patentinhaber: Festo AG & Co. KG, 73734 Esslingen (DE)
(72) Erfinder: Berwanger, Johannes, 73733 Esslingen (DE)
(74) Vertreter: Abel, Martin

(56) Entgegenhaltungen:
- DE-A1-102004 033 604
- DE-A1-102010 022 624
- US-A1- 2003 234 300

## Beschreibung

Die Erfindung betrifft eine Ventilanordnung, mit mehreren Ventilblöcken, die in einer Reihenrichtung aneinandergereiht oder aneinanderreihbar sind und jeweils ein Quetschventil aufweisen, das ein zwischen einem Medieneinlass und einem Medienauslass des zugeordneten Ventilblockes angeordnetes, durch Fluidkraft verformbares Ventilglied aufweist, wobei in jedem Ventilblock mindestens ein zur fluidischen Betätigung des Ventilgliedes mit einer Betätigungskammer des Quetschventils kommunizierender Betätigungskanal verläuft.

Aus der DE 10 2004 033 604 A1 ist ein Pulverfarbenwechsler bekannt, der mit einer Ventilanordnung der vorgenannten Art ausgestattet ist. Die Ventilanordnung enthält hier einen Verteiler, an dessen Außenfläche mehrere Ventilblöcke in einer Reihenrichtung aufeinanderfolgend und mit geringfügigem Abstand zueinander individuell befestigt sind. Jeder Ventilblock enthält ein Quetschventil, das mit einem Aktivierungsanschluss versehen ist, der eine fluidische Betätigung des Ventilgliedes des zugeordneten Quetschventils gestattet. Hierzu kann an jedem Aktivierungsanschluss eine individuelle Aktivierungsleitung angebracht werden. Der Anschlussaufwand ist entsprechend hoch.

Der Erfindung liegt die Aufgabe zugrunde, eine Ventilanordnung mit Quetschventilen zu schaffen, die sich einfach und variabel zusammenstellen lässt.

Zur Lösung dieser Aufgabe ist vorgesehen, dass die Ventilblöcke unter Bildung einer Ventilblockgruppe mit in der Reihenrichtung einander zugewandten Montageflächen aneinander angebaut oder anbaubar sind, wobei die Ventilblockgruppe von mindestens einem Betätigungskanalnetz durchsetzt ist, das sich aus im Bereich der Montageflächen miteinander kommunizierenden individuellen Betätigungskanälen der Ventilblöcke zusammensetzt, wobei pro Betätigungskanalnetz in jeden Betätigungskanal jedes Ventilblockes ein Absperrventil eingeschaltet ist, durch das die Fluidverbindung zur Betätigungskammer des zugeordneten Quetschventils wahlweise freigebbar oder absperrbar ist, ohne die durch das zugeordnete Betätigungskanalnetz hervorgerufene fluidische Vernetzung der Ventilblöcke untereinander zu unterbrechen.

Bei dieser Ventilanordnung können mehrere Ventilblöcke baugruppenartig zu einer Ventilblockgruppe zusammengesetzt werden, ohne auf ein zusätzliches, alle Ventilblöcke gemeinsam tragendes Trägerelement zurückgreifen zu müssen. Die durch die Kombination der Ventilblöcke erhaltene Ventilblockgruppe ist bevorzugt selbsttragend, wobei in der Reihenrichtung einander benachbarte Ventilblöcke mit einander zugewandten Montageflächen aneinander angesetzt sind. Die Montageflächen bilden Schnittstellenbereiche, in denen in den einzelnen Ventilblöcken ausgebildete Betätigungskanäle derart fluidisch miteinander verbunden sind, dass sich mindestens ein Betätigungskanalnetz ergibt, das sich durch sämtliche Ventilblöcke der Ventilblockgruppe hindurch erstreckt. Wird an einer dafür vorgesehenen Stelle ein Betätigungsfluid in das Betätigungskanalnetz eingespeist, steht dieses aufgrund der Kanalvernetzung in sämtlichen Ventilblöcken der Ventilblockgruppe zur Verfügung. Die vorhandenen Absperrventile ermöglichen es in diesem Zusammenhang, eine individuelle Auswahl dahingehend zu treffen, welches oder welche Quetschventil(e) der Ventilblockgruppe mittels eines Betätigungskanalnetzes betätigbar sein soll oder nicht. Bei demjenigen Ventilblock, dessen Quetschventil durch ein bestimmtes Betätigungskanalnetz nicht aktiviert werden soll, braucht lediglich das zugeordnete Absperrventil in eine Absperrstellung gebracht werden, in der es die Fluidverbindung zur Betätigungskammer des betreffenden Quetschventils absperrt. Da diese Absperrung sich nicht auf die fluidische Vernetzung zwischen den einzelnen Ventilblöcken auswirkt, können die Quetschventile eines oder mehrerer weiterer Ventilblöcke weiterhin uneingeschränkt mittels des gleichen Betätigungskanalnetzes betrieben werden. Die Möglichkeit der Aneinanderreihung mehrerer Ventilblöcke gestattet einen modularen Aufbau der Ventilanordnung mit einer variablen Anzahl von Ventilblöcken.

Vorteilhafte Weiterbildungen der Erfindung gehen aus den Unteransprüchen hervor.

Bei dem Ventilglied handelt es sich vorzugsweise um einen gummielastisch verformbaren Schlauchkörper. Der dem zu steuernden Medium zur Verfügung stehende Strömungsquerschnitt lässt sich hier durch mehr oder weniger starkes Zusammenquetschen des Schlauchkörpers vorgeben. Um die Strömung eines Mediums gänzlich zu unterbinden, wird der Schlauchkörper so stark zusammengequetscht, dass der von ihm definierte Schlauchkanal abgesperrt ist, insbesondere dadurch, dass sich gegenüberliegende Wandabschnitte des Schlauchkörpers fluiddicht aneinander angedrückt werden.

Die Quetschventile können wahlweise so ausgebildet sein, dass sie direkt oder indirekt mittels Fluidkraft betätigbar sind. Bei direkter Betätigung wirkt ein unter Überdruck stehendes Betätigungsfluid in der zugeordneten Betätigungskammer direkt auf die Außenfläche des Ventilgliedes, um dessen Verformung zu bewirken. Bei einer indirekten Betätigung sind dem Außenumfang des bevorzugt schlauchförmigen Ventilgliedes ein oder mehrere bewegliche Quetschelemente zugeordnet, die durch Fluidbeaufschlagung mindestens einer Betätigungskammer bewegbar sind, um mechanisch auf das Ventilglied einzuwirken und dessen Verformung hervorzurufen.

Jeder der individuellen Betätigungskanäle, aus denen sich mindestens ein Betätigungskanalnetz zusammensetzt, verfügt zweckmäßigerweise über einen sich zwischen einander entgegengesetzt orientierten Montageflächen des zugeordneten Ventilblockes erstreckenden Durchgangskanal und einen von dem Durchgangskanal abzweigenden und zur Betätigungskammer des zugeordneten Quetschventils führenden Zweigkanal. In diesem Zusammenhang ist das Absperrventil bevorzugt dem Zweigkanal so zugeordnet, dass es diesen Zweigkanal je nach Schaltstellung freigeben oder absperren kann. Der Durchgangskanal ist mithin unabhängig von der Schaltstellung des Absperrventils ständig offen, so dass die Vernetzung zwischen den Ventilblöcken durch die miteinander kommunizierenden Durchgangskanäle hindurch ständig gewährleistet ist.

Enthält die Ventilblockgruppe nur zwei Ventilblöcke, kann durch entsprechende Einstellung der Absperrventile erreicht werden, dass durch die Fluideinspeisung in ein Betätigungskanalnetz entweder nur das eine oder das andere Quetschventil betätigt wird oder eine gleichzeitige Betätigung der Quetschventile erfolgt. Enthält die Ventilblockgruppe mehr als zwei Ventilblöcke, kann durch entsprechende Einstellung der Absperrventile eine beliebige Auswahl der bei Beaufschlagung des Betätigungskanalnetzes zu betätigenden und nicht zu betätigenden Ventilblöcke beziehungsweise Quetschventile getroffen werden.

Die Verbindung der Ventilblöcke zu einer selbsttragenden Ventilblockgruppe kann prinzipiell beispielsweise dadurch erfolgen, dass sämtliche Ventilblöcke mittels eines oder mehrerer Zuganker einheitlich zusammengespannt werden. Als vorteilhafter wird es jedoch angesehen, wenn lediglich die in der Reihenrichtung unmittelbar benachbart zueinander angeordneten Ventilblöcke unabhängig von den anderen Ventilblöcken paarweise mechanisch miteinander verbunden sind. Auf diese Weise kann eine Verbindung zwischen benachbarten Ventilblöcken im Reparaturfalle gelöst werden, ohne die anderen Ventilblöcke voneinander trennen zu müssen. Außerdem ermöglicht diese voneinander unabhängige Montage der einzelnen Ventilblöcke eine sehr variable Erweiterung mit weiteren Ventilblöcken oder auch die Reduzierung der Anzahl der in der Ventilblockgruppe zusammengefassten Ventilblöcke.

Bei einer Ausführungsform der Ventilanordnung ist die Ventilblockgruppe mit genau einem Betätigungskanalnetz ausgestattet. Als zweckmäßiger, weil in der Regel variabler, wird allerdings eine Bauform angesehen, bei der die Ventilblockgruppe von mehreren funktionell parallelgeschalteten Betätigungskanalnetzen durchsetzt ist. Insbesondere entspricht die Anzahl der vorhandenen Betätigungskanalnetze der Anzahl der vorhandenen Ventilblöcke. Jeder Ventilblock ist in diesem Fall bevorzugt mit einer der Anzahl von Betätigungskanalnetzen entsprechenden Anzahl von Absperrventilen ausgestattet, die unabhängig voneinander betätigbar beziehungsweise einstellbar sind. Es besteht auf diese Weise die vorteilhafte Möglichkeit, jedem Betätigungskanalnetz durch entsprechende Einstellung der Absperrventile ein oder mehrere Quetschventile zuzuordnen, das beziehungsweise die betätigt werden, wenn das zugeordnete Betätigungskanalnetz mit einem Betätigungsfluid beaufschlagt wird.

Beim Vorhandensein mehrerer Betätigungskanalnetze kommuniziert die Betätigungskammer jedes Quetschventils mit mehreren Betätigungskanalnetzen. Um Rückwirkungen beziehungsweise Interaktionen zwischen den verschiedenen Betätigungskanalnetzen zu vermeiden, ist es in diesem Fall zweckmäßig, stets nur ein Absperrventil pro Ventilblock in die Freigabestellung zu schalten und die anderen Absperrventile in die Absperrstellung zu verbringen.

Die Absperrventile sind zweckmäßigerweise manuell oder elektrisch betätigbar ausgebildet. Auch eine Kombinationsbauform mit der Möglichkeit sowohl manueller als auch elektrischer Betätigung ist ohne weiteres möglich. Zweckmäßig ist es, wenn die Absperrventile vom bistabilen Typ sind und in der jeweils eingestellten Schaltstellung auch dann lösbar verharren, wenn eine zuvor aufgebrachte Umschaltkraft weggenommen worden ist.

Sind die Absperrventile mindestens eines Betätigungskanalnetzes elektrisch betätigbar ausgebildet, enthält die Ventilanordnung zweckmäßigerweise mindestens einen die Ventilblockgruppe durchziehenden elektrischen Steuerleitungsstrang, der sich aus individuellen Steuerleitungen der einzelnen Ventilblöcke zusammensetzt, die im Bereich der Montageflächen miteinander kommunizieren, wenn die Ventilblöcke zu der Ventilblockgruppe zusammengesetzt sind.

Die Ventilanordnung kann mit mehreren elektrischen Steuerleitungssträngen ausgestattet sein, um ein oder mehrere Absperrventile ausgewählt einzeln oder gruppenweise betätigen zu können. Die Anzahl der Steuerleitungsstränge kann beispielsweise der Anzahl der vorhandenen Ventilblöcke und/oder Absperrventile entsprechen. Bei einer besonders vorteilhaften Ausgestaltung ist die Ventilbaugruppe von mindestens einem und bevorzugt von genau einem Steuerleitungsstrang durchsetzt, der zur Übertragung serieller Steuersignale ausgebildet ist und pro Ventilblock mit einem elektrisch betätigbaren Absperrventil korrespondiert. Jedem Absperrventil ist hier zweckmäßigerweise eine zur Bearbeitung und insbesondere Umsetzung der seriellen Steuersignale geeignete elektronische Busstation zugeordnet, so dass die zum gleichen Betätigungskanalnetz gehörenden Absperrventile unabhängig voneinander über ein und denselben, als Busstrang ausgebildeten Steuerleitungsstrang ansteuerbar sind. Eine solche Ausgestaltung ermöglicht in vorteilhafter Weise eine Ventilanordnung mit minimaler fluidtechnischer Ausstattung, indem sie lediglich ein einziges Betätigungskanalnetz aufweist und pro Ventilblock nur ein einziges Absperrventil vorhanden ist.

Die Ventilblöcke können einteilig ausgeführt sein, was sehr geringe Herstellungskosten ermöglicht. Eine höhere Variabilität wird allerdings dadurch erzielt, dass jeder Ventilblock in ein das Quetschventil enthaltendes Arbeitsmodul und ein daran angebautes Steuermodul unterteilt ist, wobei das Steuermodul die für die gegenseitige fluidische Vernetzung der Ventilmodule und, gegebenenfalls, auch die für die gegenseitige elektrische Vernetzung der Ventilmodule verantwortlichen Bestandteile enthält.

Prinzipiell können Möglichkeiten getroffen sein, um das für die Betätigung der Quetschventile benötigte Betätigungsfluid direkt an einem der Ventilblöcke in das betreffende Betätigungskanalnetz einzuspeisen. Als vorteilhafter wird es jedoch angesehen, wenn an mindestens einen der beiden die Reihe von Ventilblöcken abschließenden Ventilblöcke ein quetschventilloser Anschlussblock angebaut oder anbaubar ist, der über eine der Anzahl der Betätigungskanalnetze entsprechende Anzahl von Fluidanschlüssen verfügt, die jeweils mit einem der Betätigungskanalnetze kommunizieren. Damit ist die Möglichkeit geschaffen, die Fluidversorgung für die Betätigung der Quetschventile von zentraler Stelle aus abzuwickeln. Der Anschlussblock verfügt bei elektrisch betätigbaren Absperrventilen zweckmäßigerweise auch über elektrische Schnittstellenmittel, die eine elektrische Verbindung mit einer elektronischen Steuereinrichtung ermöglichen.

Nachfolgend wird die Erfindung anhand der beiliegenden Zeichnung näher erläutert. In dieser zeigen:
- Figur 1: in perspektivischer Darstellung eine bevorzugte Ausführungsform der erfindungsgemäßen Ventilanordnung, die über eine sich aus drei Ventilblöcken zusammensetzende Ventilblockgruppe verfügt,
- Figur 2: in schematischer Darstellung einen Querschnitt durch die Ventilanordnung aus Figur 1 gemäß Schnittlinie II-II,
- Figur 3: eine Schemadarstellung der aus Figuren 1 und 2 ersichtlichen Ventilanordnung und
- Figur 4: eine Schemadarstellung einer alternativen Ausführungsform der Ventilanordnung in einer mit Figur 3 vergleichbaren Darstellungsweise.

Die nachfolgende Beschreibung bezieht sich auf alle in der Zeichnung illustrierten Ausführungsbeispiele, sofern im Einzelfall keine anderen Angaben gemacht werden.

Die aus der Zeichnung ersichtlichen Ventilanordnungen 1 enthalten jeweils eine Mehrzahl von Modulblöcken 2, die in einer durch eine strichpunktierte Linie angedeuteten Reihenrichtung 3 aneinandergereiht und unter Bildung einer Modulbaugruppe 4, in bevorzugt lösbarer Weise, mechanisch miteinander verbunden sind. Die Modulbaugruppe 4 ist bevorzugt selbsttragend ausgeführt und erhält ihre Stabilität allein durch die Verbindung der Modulblöcke 2 untereinander.

Mehrere Modulblöcke 2 der Modulbaugruppe 4 sind als Ventilblöcke 5 ausgebildet. Sie sind in der Reihenrichtung 3 aneinander angereiht und bilden im mechanisch miteinander verbundenen Zustand eine als Ventilblockgruppe 6 bezeichnete Untergruppe der Modulbaugruppe 4. Die Ventilanordnungen 1 des Ausführungsbeispiels sind exemplarisch mit drei Ventilblöcken 5 ausgestattet.

Die Ventilblöcke 5 sind beispielsweise quaderförmig ausgebildet, können aber auch jede andere äußere Formgebung haben. Jeder Ventilblock 5 hat eine Längsachse 7, die die gleiche Orientierung wie die Reihenrichtung 3 aufweist.

Jeder Ventilblock 5 verfügt an in Achsrichtung seiner Längsachse 7 einander entgegengesetzten Außenflächen über eine Montagefläche. Zur besseren Unterscheidung seien diese Montageflächen im Folgenden als erste Montagefläche 8a und zweite Montagefläche 8b bezeichnet. Zur Bildung der Ventilblockgruppe 6 sind die Ventilblöcke 5 mit einander zugewandten ersten und zweiten Montageflächen 8a, 8b bevorzugt direkt aneinander ansetzbar.

An ihren beiden axialen Enden ist die Modulbaugruppe 4 zweckmäßigerweise durch je einen Abschlussblock 12a, 12b abgeschlossen. Jeder Abschlussblock 12a, 12b hat eine Montagefläche 13, mit der er zur Bildung der Modulbaugruppe 4 an die außen liegende Montagefläche 8a beziehungsweise 8b jeweils eines der beiden äußeren Ventilblöcke 5 der Ventilblockgruppe 6 anbaubar ist. Beim Ausführungsbeispiel ist der eine Abschlussblock 12a als Anschlussblock 14 konzipiert, der als Schnittstellenelement für die fluidische und gegebenenfalls auch elektrische Kommunikation der Ventilblöcke 5 mit peripheren Einrichtungen dient. Der andere Abschlussblock 12b fungiert beim Ausführungsbeispiel als einfaches Verschlusselement.

Die Modulbaugruppe 4 bekommt ihren mechanischen Zusammenhalt bevorzugt dadurch, dass jeweils in der Reihenrichtung 3 unmittelbar benachbart zueinander angeordnete Modulblöcke 2 unabhängig von den anderen Modulblöcken 2 paarweise mechanisch miteinander verbunden sind. Hierbei liegt bevorzugt eine lösbare Verbindung vor. Beim Ausführungsbeispiel erfolgt die mechanische Verbindung zwischen den jeweils benachbarten Modulblöcken 2 durch je eine individuelle mechanische Verbindungseinrichtung 15, die exemplarisch zwei auf einander entgegengesetzten Längsseiten der Modulbaugruppe 4 angeordnete Klemmelemente 16a, 16b enthält, die durch zwischen den benachbarten Modulblöcken 2 hindurchgreifende Schraubelemente 17 zueinandergezogen werden können und dadurch mit Abschnitten beider benachbarter Modulblöcke 2 verspannt werden. Hierbei ergibt sich zweckmäßigerweise auch ein formschlüssiger Eingriff zwischen den Klemmelementen 16a, 16b und den zu verbindenden Modulblöcken 2, und zwar insbesondere derart, dass die zu verbindenden Modulblöcke 2 in der Reihenrichtung 3 miteinander verspannt werden.

Durch die mechanischen Verbindungseinrichtungen 15 werden mithin auch die Ventilblöcke 5 untereinander und unabhängig von den Abschlussblöcken 12a, 12b zu der selbsttragenden Ventilblockgruppe 6 zusammengefasst. Die Ventilblockgruppe 6 liegt unabhängig davon vor, ob die Abschlussblöcke 12a, 12b angebracht sind oder nicht.

Durch die individuelle Verbindung jeweils benachbarter Modulblöcke 2 besteht die vorteilhafte Möglichkeit, die Modulbaugruppe 4 sehr flexibel hinsichtlich der Anzahl der Ventilblöcke 5 zu variieren. Man kann praktisch zwischen je zwei Modulblöcke 2 bei Bedarf einen weiteren Ventilblock 5 einsetzen, ohne die Verbindung zwischen den anderen Modulblöcken 2 zu lösen.

Jeder Ventilblock 5 enthält ein Quetschventil 18. Das Quetschventil 18 verfügt über ein Ventilgehäuse 22, in dem ein durch Fluidkraft verformbares Ventilglied 23 angeordnet ist. Das Ventilglied 23 ist von einem Ventilgliedkanal 24 durchsetzt und ist bevorzugt von einem zumindest in radialer Richtung gummielastisch verformbaren Schlauchkörper 25 gebildet. Der Schlauchkörper 25 umschließt den Ventilgliedkanal 24.

Der Ventilgliedkanal 24 kommuniziert mit einerseits einem Medieneinlass 26 und andererseits einem Medienauslass 27. Medieneinlass 26 und Medienauslass 27 sind am zugeordneten Ventilblock 5 angeordnet. In einer Offenstellung des Ventilgliedes 23 kann ein an dem Medieneinlass 26 zugeführtes Medium durch den Ventilgliedkanal 24 hindurch zum Medienauslass 27 strömen und von dort aus einem zu versorgenden Verbraucher zugeführt werden.

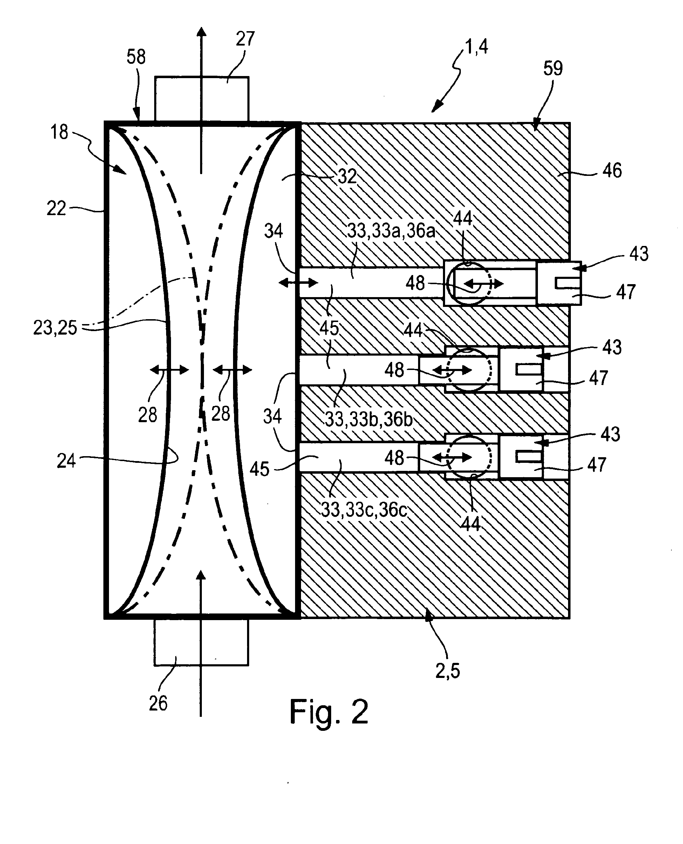

Durch Aufbringen einer Fluidkraft auf den Außenumfang des Schlauchkörpers 25 kann die Wandung des Schlauchkörpers 25 elastisch verformt werden, wobei sich der Strömungsquerschnitt des Ventilgliedkanals 24 verändert. In Figur 2 ist mit Doppelpfeilen 28 die Verformbarkeit des Schlauchkörpers 25 beziehungsweise dessen Wandung angedeutet. Je stärker der Schlauchkörper 25 zusammengequetscht wird, desto geringer ist der zur Verfügung stehende Strömungsquerschnitt des Ventilgliedkanals 24. Der Schlauchkörper 25 kann beim Ausführungsbeispiel bis in die strichpunktiert angedeutete Schließstellung zusammengequetscht werden, in der der Ventilgliedkanal 24 komplett abgesperrt ist und ein Mediendurchtritt nicht mehr möglich ist.

Mithin kann mittels des Quetschventils 18 die Strömungsrate eines am Medieneinlass 26 zuströmenden Mediums variabel und bevorzugt stufenlos zwischen einem Maximalwert und dem Wert null vorgegeben werden.

Das auf diese Weise steuerbare Medium kann jedes beliebige fließfähige Medium sein, beispielsweise ein gasförmiges, ein flüssiges, ein pulverförmiges oder ein pastöses Medium.

Im Ventilgehäuse 22 des Quetschventils 18 ist eine Betätigungskammer 32 ausgebildet, die mit mehreren Betätigungskanälen 33a, 33b, 33c kommuniziert, die fluidisch parallelgeschaltet sind. Durch jeden Betätigungskanal 33a, 33b, 33c hindurch kann ein unter Überdruck stehendes Betätigungsfluid in die Betätigungskammer 32 eingespeist werden, um die Verformung des Ventilgliedes 23 und mithin die Betätigung des Quetschventils 18 hervorzurufen.

Beim Ausführungsbeispiel erstreckt sich die Betätigungskammer 32 nach Art einer Ringkammer rings um das Ventilglied 23 herum, wobei zweckmäßigerweise eine bezüglich des Ventilgliedes 23 koaxiale Anordnung vorliegt. Das in der Betätigungskammer 32 anstehende Betätigungsfluid wirkt direkt auf die dem Ventilgliedkanal 24 entgegengesetzte Außenfläche der Wandung des Schlauchkörpers 25 ein und ruft mit dieser Fluidkraft die durch Doppelpfeile 28 illustrierte Verformung des Schlauchkörpers 25 hervor. Das Ventilglied 23 wird hier also vom Betätigungsfluid direkt betätigt.

Bei einer nicht gezeigten Ausführungsform ist der Schlauchkörper 25 an seinem Außenumfang von bevorzugt mehreren in der Richtung der Doppelpfeile 28 beweglichen Quetschelementen flankiert, die durch Fluidkraft eines in eine Betätigungskammer 32 eingeleiteten Betätigungsfluides direkt oder indirekt in der Pfeilrichtung der Doppelpfeile 28 beweglich sind, um mechanisch auf den Schlauchkörper 25 einzuwirken. In diesem Falle wird das Ventilglied 23 durch das Betätigungsfluid indirekt betätigt.

Jeder der mehreren Ventilblöcke 5 ist in der eben geschilderten Weise mit mehreren voneinander unabhängigen, individuellen Betätigungskanälen 33a, 33b, 33c ausgestattet. Die Anzahl der Betätigungskanäle 33a, 33b, 33c entspricht zweckmäßigerweise der Anzahl der in der Ventilblockgruppe 6 enthaltenen Anzahl von Ventilblöcken 5. Exemplarisch enthält somit jeder der drei Ventilblöcke 5 drei Betätigungskanäle 33a, 33b, 33c, die im Folgenden zur besseren Unterscheidung auch als erster Betätigungskanal 33a, zweiter Betätigungskanal 33b und dritter Betätigungskanal 33c bezeichnet sein sollen.

Zur Vereinfachung der weiteren Beschreibung werden die Betätigungskanäle 33a, 33b, 33c bei gemeinsamer Benennung im Folgenden auch nur mit der Bezugsziffer "33" angesprochen.

Jeder Betätigungskanal 33 mündet nicht nur mit einer Betätigungsöffnung 34 in die Betätigungskammer 32 ein, sondern darüber hinaus auch noch zu jeder Montagefläche 8a, 8b des betreffenden Ventilblockes 5. So findet sich pro Betätigungskanal 33 eine erste Kommunikationsöffnung 35a an der Montagefläche 8a und eine zweite Kommunikationsöffnung 35b an der anderen Montagefläche 8b. Die Kommunikationsöffnungen 35a, 35b sind derart an den Montageflächen 8a, 8b platziert, dass sich erste und zweite Kommunikationsöffnungen 35a, 35b der in den Ventilblöcken 5 ausgebildeten Betätigungskanäle 33 so gegenüberliegen, dass zum einen alle ersten Betätigungskanäle 33a, ferner alle zweiten Betätigungskanäle 33b und schließlich auch alle dritten Betätigungskanäle 33c fluidisch miteinander in Verbindung stehen. Die derart miteinander vernetzten ersten Betätigungskanäle 33a sämtlicher Ventilblöcke 5 bilden auf diese Weise ein erstes Betätigungskanalnetz 36a. In vergleichbarer Weise bilden alle zweiten Betätigungskanäle 33b ein zweites Betätigungskanalnetz 36b und alle dritten Betätigungskanäle 33c ein drittes Betätigungskanalnetz 36c.

Im Fügebereich der einander zugewandten Montageflächen 8a, 8b sind zweckmäßigerweise Dichtungsmittel 37 im Bereich der sich gegenüberliegenden Kommunikationsöffnungen 35a, 35b angeordnet, um einen leckagefreien Fluidübertritt zwischen den Ventilblöcken 5 zu gewährleisten. Die Dichtungsmittel 37 bestehen beispielsweise aus einzelnen O-Ringen oder aus einer auch als Formdichtung bezeichenbaren Dichtungseinheit.

Der einenends an der Ventilblockgruppe 6 montierte Abschlussblock 12b schließt die ihm zugewandten Kommunikationsöffnungen 35b des benachbarten Ventilblockes 5 fluiddicht ab.

Der als Anschlussblock 14 ausgebildete Abschlussblock 12a verfügt über eine Mehrzahl von außen her zugänglicher Fluidanschlüsse 38. Die Anzahl der Fluidanschlüsse 38 entspricht der Anzahl der Betätigungskanalnetze 36, so dass exemplarisch insgesamt drei Fluidanschlüsse 38 vorhanden sind, die auch als erster Fluidanschluss 38a, zweiter Fluidanschluss 38b und dritter Fluidanschluss 38c bezeichnet werden. Der erste Fluidanschluss 38a gehört zum ersten Betätigungskanalnetz 36a, der zweite Fluidanschluss 38b gehört zum zweiten Betätigungskanalnetz 36b und der dritte Fluidanschluss 38c gehört zum dritten Betätigungskanalnetz 36c.

Jeder Fluidanschluss 38a, 38b, 38c kommuniziert mit einem internen Anschlusskanal 42a, 42b, 42c des Anschlussblockes 14, der an der Montagefläche 13 des Anschlussblockes 14 so ausmündet, dass er mit einer Kommunikationsöffnung 35a des benachbarten Ventilblockes 5 kommuniziert und dadurch die gewünschte Vernetzung zu den drei Betätigungskanalnetzen 36a, 36b, 36c verwirklicht ist.

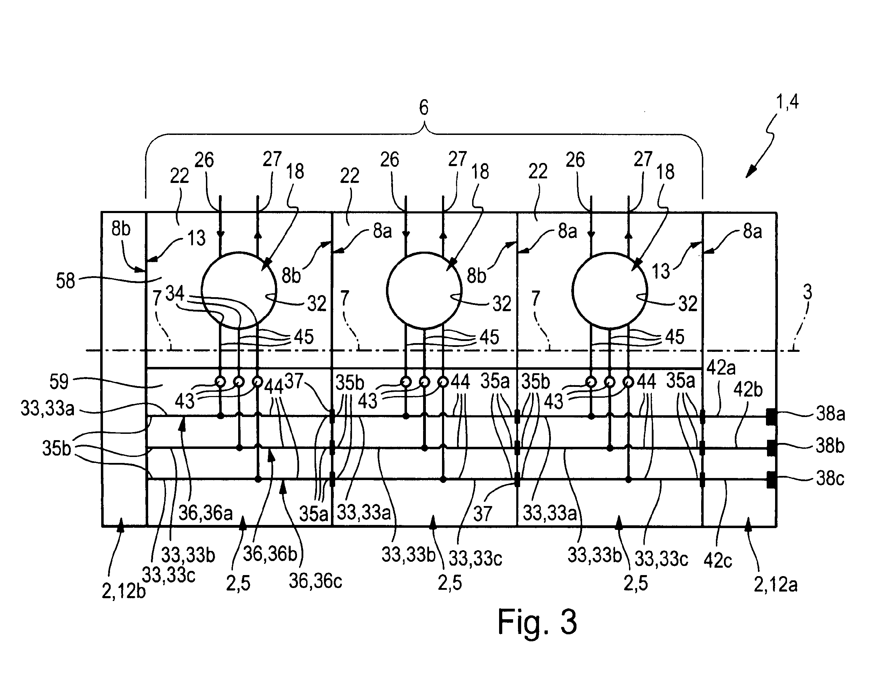

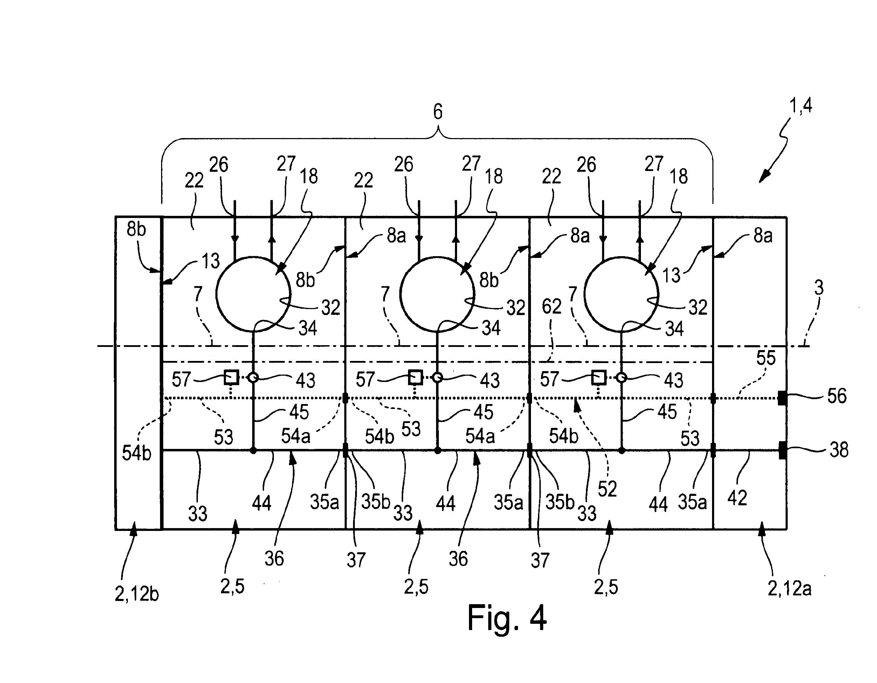

Im Unterschied zum Ausführungsbeispiel der Figur 3 verfügt die Ventilanordnung 1 gemäß Figur 4 über nur ein einziges Betätigungskanalnetz 36. Jeder Ventilblock 5 ist hier mit lediglich einem einzigen Betätigungskanal 33 ausgestattet, wobei die einzelnen Betätigungskanäle 33 der mehreren Ventilblöcke 5 zur Bildung des einzigen Betätigungskanalnetzes 36 miteinander verbunden sind und außerdem mit einem einzigen Anschlusskanal 42 kommunizieren, der in dem Anschlussblock 14 ausgebildet ist und zu einem bevorzugt einzigen Fluidanschluss 38 führt.

Den Betätigungskanalnetzen 36 sämtlicher Ausführungsbeispiele ist gemeinsam, dass in jedem Ventilblock 5 in jeden Betätigungskanal 33 ein Absperrventil 43 eingeschaltet ist. Dieses Absperrventil 43 kann wahlweise in eine Freigabestellung oder in eine Absperrstellung geschaltet werden, um die Fluidverbindung zur Betätigungskammer 32 des zugeordneten Quetschventils 18 wahlweise freizugeben oder abzusperren. Das Absperrventil 43 ist dabei so angeordnet und ausgebildet, dass es unabhängig von seiner Betriebsstellung die durch das zugehörige Betätigungskanalnetz 36 hervorgerufene fluidische Vernetzung zwischen den einzelnen Ventilblöcken 5 nicht beeinträchtigt. Auch wenn also beispielsweise eines der Absperrventile 43 die Absperrstellung einnimmt, ist das zugeordnete Betätigungskanalnetz 36 in der Lage, die Fluidverbindung zwischen den Ventilblöcken 5 und dem zugeordneten Fluidanschluss 38 aufrechtzuerhalten.

Diese Funktionalität ergibt sich beim Ausführungsbeispiel in vorteilhafter Weise dadurch, dass jeder Betätigungskanal 33 in zwei ständig miteinander verbundene Kanalabschnitte unterteilt ist, von denen der eine als Durchgangskanal 44 und der andere als Zweigkanal 45 bezeichnet sei, wobei das Absperrventil 43 dem Zweigkanal 45 zugeordnet ist. Der Durchgangskanal 44 durchsetzt den betreffenden Ventilblock 5 in der Reihenrichtung 3 und verfügt über die an einander entgegengesetzten Montageflächen 8a, 8b angeordneten Kommunikationsöffnungen 35a, 35b. Der Zweigkanal 45 zweigt von dem Durchgangskanal 44 ab und mündet über die Betätigungsöffnung 34 in die Betätigungskammer 32 ein. Die Absperrventile 43 sind so konzipiert, dass sie je nach Schaltstellung den Fluiddurchgang durch den zugeordneten Zweigkanal 45 freigeben oder absperren können, wobei der zugeordnete Durchgangskanal 44 unabhängig von der eingenommenen Schaltstellung des betreffenden Absperrventils 43 ständig offen ist.

Gemäß der Illustration in Figur 2 verfügt jedes Absperrventil 43 beispielsweise über ein in einem Ventilblockgehäuse 46 verstellbar angeordnetes Ventilglied 47, das gemäß Doppelpfeil 48 zwischen einer Absperrstellung und einer Freigabestellung bewegbar ist, wobei es in der Absperrstellung derart in den Zweigkanal 45 eintaucht oder an einem den Zweigkanal umrahmenden Ventilsitz anliegt, dass das Betätigungsfluid den Zweigkanal 45 nicht mehr durchströmen kann. In Figur 2 ist das Absperrventil 43 des ersten Betätigungskanals 33a in der Offenstellung gezeigt, während die Absperrventile 43 des zweiten und dritten Betätigungskanals 33b, 33c die Absperrstellung einnehmen.

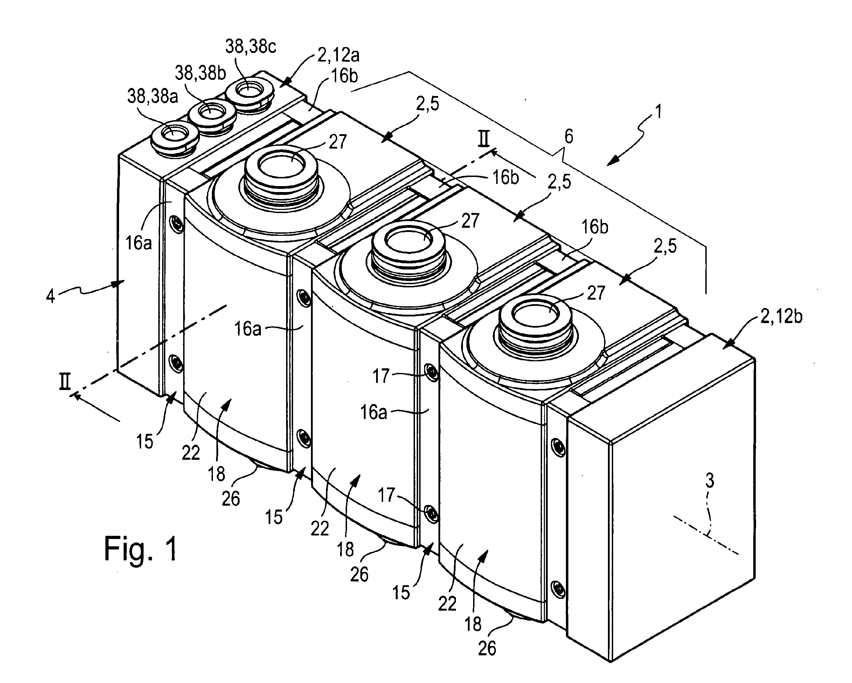

Die mehreren Betätigungskanalnetze 36 der Ventilanordnung gemäß Figuren 1 bis 3 sind funktionell parallelgeschaltet. Jedes Betätigungskanalnetz 36a, 36b, 36c kommuniziert hier unabhängig von den anderen Betätigungskanalnetzen mit der Betätigungskammer 32 des Quetschventils 18 jedes Ventilblockes 5.

In Abhängigkeit von der jeweils eingestellten Betriebsstellung der dem gleichen Betätigungskanalnetz 36 zugeordneten Absperrventile 43 lässt sich variabel festlegen, welches der Quetschventile 18 durch das am zugeordneten Fluidanschluss 38 eingespeiste Betätigungsfluid betätigbar ist. Nicht betätigt wird jeweils dasjenige Quetschventil, dessen Verbindung zum zugeordneten Fluidanschluss 38 abgesperrt ist, weil das zugeordnete Absperrventil 43 in der Absperrstellung positioniert ist. Mithin besteht die Möglichkeit, jedes Betätigungskanalnetz 36 durch Wahl einer entsprechenden Betriebsposition der zu ihm gehörenden Absperrventile 43 derart zu konfigurieren, dass entweder keines der angeschlossenen Quetschventile 18 betätigbar ist oder dass nur einige oder sämtliche Quetschventile 18 betätigt werden können.

Diese Konfigurationsmöglichkeit besteht für jedes Betätigungskanalnetz 36a, 36b, 36c. Auf diese Weise besteht eine äußerst variable fluidische Verschaltungsmöglichkeit der zu den einzelnen Ventilblöcken 5 gehörenden Quetschventile 18.

Beim Ausführungsbeispiel der Figuren 1 bis 3 ergibt sich durch die Betätigungskammern 32 hindurch eine ständige fluidische Vernetzung zwischen allen vorhandenen Betätigungskanalnetzen 36a, 36b, 36c. Gemäß Figur 2 münden alle Betätigungskanalnetze 36a, 36b, 36c mit einer Betätigungsöffnung 34 in ein und dieselbe Betätigungskammer 32 des zugeordneten Quetschventils 18 ein. Damit gleichwohl keine unerwünschten Interaktionen zwischen den mehreren Betätigungskanalnetzen 36a, 36b, 36c entstehen, sollte pro Ventilblock 5 zur gleichen Zeit stets nur ein Absperrventil 43 die Offenstellung einnehmen und sollten die anderen Absperrventile 43 dieses Ventilblockes 5 dabei in der Absperrstellung positioniert sein.

Die Absperrventile 43 können prinzipiell von beliebiger Bauart sein. Beim Ausführungsbeispiel der Figuren 1 bis 3 sind sie als manuell betätigbare Ventile ausgeführt. Beispielsweise handelt es sich um mit den Fingern einer Hand oder mit einem geeigneten Werkzeug manuell betätigbare Tastventile.

Von Vorteil ist es, wenn die Absperrventile 43 unabhängig von ihrer Betätigungsart als bistabile Ventile ausgeführt sind, die von sich aus in der jeweils eingestellten Betriebsposition - also entweder in der Absperrstellung oder in der Offenstellung - verharren, auch wenn eine zuvor aufgebrachte Umschaltkraft wieder entfernt wird. Beim Ausführungsbeispiel der Figuren 1 bis 3 ergibt sich dies dadurch, dass die Ventilglieder 47 durch Verdrehen in der jeweiligen Schaltstellung lösbar verriegelbar sind.

Die Absperrventile 43 können alternativ oder zusätzlich auch von elektrisch betätigbarer Bauart sein. Die in Figur 4 illustrierte Ventilanordnung verfügt über Absperrventile 43 dieses Typs.

Zur elektrischen Betätigung der Absperrventile 43 ist bei der Ventilanordnung 1 des in Figur 4 illustrierten Ausführungsbeispiels die Ventilblockgruppe 6 von mindestens einem elektrischen Steuerleitungsstrang 52 durchsetzt. Dieser Steuerleitungsstrang 52 resultiert aus einer elektrischen Verkettung von in den einzelnen Ventilblöcken 5 ausgebildeten individuellen elektrischen Steuerleitungen 53.

In jedem Ventilblock 5 ist mindestens eine solche elektrische Steuerleitung 53 angeordnet oder ausgebildet, die mit elektrischen Kontaktmitteln 54a, 54b an den beiden einander entgegengesetzten Montageflächen 8a, 8b des betreffenden Ventilblockes 5 endet. Sind die Ventilblöcke 5 zu der Ventilblockgruppe 6 zusammengebaut, ergibt sich durch Zusammenwirken der einander im Bereich der zugewandten Montageflächen 8a, 8b kontaktierenden elektrischen Kontaktmittel 54a, 54b der in der Reihenrichtung 3 durchgehende Steuerleitungsstrang 52. In dem Anschlussblock 14 setzt sich der Steuerleitungsstrang 52 mit einer weiteren elektrischen Steuerleitung 55 fort, die zu von außen her zugänglichen elektromechanischen Schnittstellenmitteln 56 am Anschlussblock 14 führt. Unter Verwendung der elektromechanischen Schnittstellenmittel 56 besteht die Möglichkeit, zur Betätigung der elektrisch aktivierbaren Absperrventile 43 dienende elektrische Steuersignale in die Ventilblockgruppe 6 einzuspeisen.

Bei dem aus Figur 4 ersichtlichen Ausführungsbeispiel ist der Steuerleitungsstrang 52 in vorteilhafter Weise als zur Übertragung serieller Steuersignale geeigneter und auch genutzter Busstrang ausgebildet. In Verbindung damit ist jeder Ventilblock 5 mit mindestens einer elektronischen Busstation 57 ausgestattet, die zwischen die Steuerleitung 53 und das Absperrventil 43 des betreffenden Ventilblockes 5 zwischengeschaltet ist und die in der Lage ist, von außen eingespeiste Steuersignale zuordnungsrichtig auszulesen und darauf basierend das angeschlossene Absperrventil 43 zu betätigen.

Hier besteht die vorteilhafte Möglichkeit, die zum gleichen Betätigungskanalnetz 36 gehörenden Absperrventile 43 unabhängig voneinander über ein und denselben, von dem Steuerleitungsstrang 52 definierten Busstrang anzusteuern. Verglichen mit einer individuellen elektrischen Kontaktierung der einzelnen Absperrventile 43 ermöglicht dies eine beträchtliche Reduzierung des Herstellungsaufwandes.

An die elektromechanischen Schnittstellenmittel 56 ist eine nicht weiter abgebildete elektronische Steuereinrichtung der Ventilanordnung 1 anschließbar. Sie liefert die Steuersignale für die Absperrventile 43. Während des Betriebes der Ventilanordnung 1 ist somit eine dynamische, selektive Betätigung der Absperrventile 43 möglich. Über den Fluidanschluss 38 kann hierbei ständig das zur Betätigung der Quetschventile 18 benötigte Betätigungsfluid gleichzeitig an allen Absperrventilen 43 anstehen. Hiervon abweichend ist das Ausführungsbeispiel der Figuren 1 bis 3 bevorzugt so ausgeführt, dass während des Dauerbetriebes der Ventilanordnung 1 im Regelfall keine Änderung der Betriebsposition der Absperrventile 43 vorgenommen wird und die selektive Betätigung der Quetschventile 18 durch entsprechend selektive Einspeisung des Betätigungsfluides in die vorhandenen mehreren Fluidanschlüsse 38a, 38b, 38c bewerkstelligt wird.

Die Ventilblöcke 5 können einteilig oder mehrteilig ausgeführt sein. Das Ausführungsbeispiel der Figuren 1 bis 3 illustriert eine mehrteilige Bauform, wobei jeder Ventilblock 5 in ein das Quetschventil 18 enthaltendes Arbeitsmodul 58 und ein daran angebautes, die für die gegenseitige fluidische Vernetzung der Ventilblöcke 5 verantwortlichen Bestandteile des mindestens einen Betätigungskanalnetzes 36 enthaltendes Steuermodul 59 unterteilt ist. Die Absperrventile 43 sind hier ebenso Bestandteile der Steuermodule 58 wie zweckmäßigerweise auch die gegebenenfalls vorhandenen Durchgangskanäle 44. Dieser modulare Aufbau erlaubt eine vorteilhafte Kombination standardisierter Arbeitsmodule 58 mit anwendungsspezifisch gestalteten Steuermodulen 59, was den Herstellungsaufwand für Ventilanordnungen unterschiedlichen Typs sehr vereinfacht.

Beim Ausführungsbeispiel der Figur 4 sind die Ventilblöcke 5 einteilig ausgeführt, können jedoch ebenfalls nach dem Vorbild des anderen Ausführungsbeispiels modular mehrteilig aufgebaut sein. Bei 62 ist strichpunktiert eine Trennlinie angedeutet, an der die Ventilblöcke 5 in jeweils ein Arbeitsmodul 58 und ein Steuermodul 59 unterteilt sein könnten.

In dem vorgenannten Fall ist die Trennlinie 62 bevorzugt so gelegt, dass die den Steuerleitungsstrang 52 bildenden elektrischen Steuerleitungen 53 und zweckmäßigerweise auch die gegebenenfalls vorhandenen Busstationen 57 Bestandteil des Steuermoduls 59 sind.

## Patentansprüche

1. Ventilanordnung, mit mehreren Ventilblöcken (5), die in einer Reihenrichtung (3) aneinandergereiht oder aneinanderreihbar sind und jeweils ein Quetschventil (18) aufweisen, das ein zwischen einem Medieneinlass (26) und einem Medienauslass (27) des zugeordneten Ventilblockes (5) angeordnetes, durch Fluidkraft verformbares Ventilglied (23) aufweist, wobei in jedem Ventilblock (5) mindestens ein zur fluidischen Betätigung des Ventilgliedes (23) mit einer Betätigungskammer (32) des Quetschventils (18) kommunizierender Betätigungskanal (33, 33a, 33b, 33c) verläuft, **dadurch gekennzeichnet, dass** die Ventilblöcke (5) unter Bildung einer Ventilblockgruppe (6) mit in der Reihenrichtung (3) einander zugewandten Montageflächen (8a,8b) aneinander angebaut oder anbaubar sind, wobei die Ventilblockgruppe (6) von mindestens einem Betätigungskanalnetz (36, 36a, 36b, 36c) durchsetzt ist, das sich aus im Bereich der Montageflächen (8a, 8b) miteinander kommunizierenden individuellen Betätigungskanälen (33, 33a, 33b, 33c) der Ventilblöcke (5) zusammensetzt, wobei pro Betätigungskanalnetz (36, 36a, 36b, 36c) in jeden Betätigungskanal (33, 33a, 33b, 33c) jedes Ventilblockes (5) ein Absperrventil (43) eingeschaltet ist, durch das die Fluidverbindung zur Betätigungskammer (32) des zugeordneten Quetschventils (18) wahlweise freigebbar oder absperrbar ist, ohne die durch das zugeordnete Betätigungskanalnetz (36, 36a, 36b, 36c) hervorgerufene fluidische Vernetzung der Ventilblöcke (5) untereinander zu unterbrechen.

2. Ventilanordnung nach Anspruch 1, **dadurch gekennzeichnet, dass** das Ventilglied (23) als gummielastisch verformbarer Schlauchkörper (25) ausgebildet ist.

3. Ventilanordnung nach Anspruch 1 oder 2, **dadurch gekennzeichnet, dass** das Ventilglied (23) von der Betätigungskammer (32) umgeben ist und direkt durch ein in die Betätigungskammer (32) einspeisbares Betätigungsfluid betätigbar ist.

4. Ventilanordnung nach einem der Ansprüche 1 bis 3, **dadurch gekennzeichnet, dass** jeder individuelle Betätigungskanal (33, 33a, 33b, 33c) einen sich zwischen einander entgegengesetzt orientierten Montageflächen (8a, 8b) des zugeordneten Ventilblockes (5) erstreckenden Durchgangskanal (44) und einen von dem Durchgangskanal (44) abzweigenden und zur Betätigungskammer (32) des zugeordneten Quetschventils (18) führenden Zweigkanal (45) aufweist, wobei das Absperrventil (43) derart dem Zweigkanal (45) zugeordnet ist, dass es diesen Zweigkanal (45) je nach Schaltstellung freigeben oder absperren kann, wobei der Durchgangskanal (44) unabhängig von der Schaltstellung des Absperrventils (43) ständig offen ist.

5. Ventilanordnung nach einem der Ansprüche 1 bis 4, **dadurch gekennzeichnet, dass** in der Reihenrichtung (3) unmittelbar benachbart zueinander angeordnete Ventilblöcke (5) der Ventilblockgruppe (6) unabhängig von den anderen Ventilblöcken (5) paarweise mechanisch miteinander verbunden sind.

6. Ventilanordnung nach einem der Ansprüche 1 bis 5, **dadurch gekennzeichnet, dass** die Ventilblockgruppe (6) mit genau einem Betätigungskanalnetz (38) ausgestattet ist.

7. Ventilanordnung nach einem der Ansprüche 1 bis 5, **dadurch gekennzeichnet, dass** die Ventilblockgruppe (6) mit mehreren funktionell parallelgeschalteten Betätigungskanalnetzen (36, 36a, 36b, 36c) ausgestattet ist.

8. Ventilanordnung nach Anspruch 7, **dadurch gekennzeichnet, dass** die Ventilblockgruppe (6) eine der Anzahl der Ventilblöcke (5) entsprechende Anzahl von Betätigungskanalnetzen (36, 36a, 36b, 36c) aufweist.

9. Ventilanordnung nach Anspruch 7 oder 8, **dadurch gekennzeichnet, dass** im gleichen Ventilblock (5) ausgebildete Betätigungskanäle (33, 33a, 33b, 33c) der mehreren Betätigungskanalnetze (36, 36a, 36b, 36c) über die Betätigungskammer (32) des zugeordneten Quetschventils (18) hinweg fluidisch miteinander vernetzt sind.

10. Ventilanordnung nach einem der Ansprüche 1 bis 9, **dadurch gekennzeichnet, dass** die Absperrventile (43) manuell und/oder elektrisch betätigbar ausgebildet sind.

11. Ventilanordnung nach einem der Ansprüche 1 bis 10, **dadurch gekennzeichnet, dass** die Absperrventile (43) vom bistabilen Typ sind und in der jeweils eingestellten Schaltstellung lösbar verharren.

12. Ventilanordnung nach einem der Ansprüche 1 bis 11, **dadurch gekennzeichnet, dass** die Absperrventile (43) mindestens eines Betätigungskanalnetzes (38) elektrisch betätigbar ausgebildet und an mindestens einen elektrischen Steuerleitungsstrang (52) angeschlossen sind, der sich aus im Bereich der Montageflächen (8a, 8b) der Ventilblöcke (5) miteinander verbundenen elektrischen Steuerleitungen (53) der einzelnen Ventilblöcke (5) zusammensetzt.

13. Ventilanordnung nach Anspruch 12, **dadurch gekennzeichnet, dass** mindestens ein Steuerleitungsstrang (52) als zur Übertragung serieller Steuersignale geeigneter und genutzter Busstrang ausgebildet ist, wobei zweckmäßigerweise jedem Absperrventil (43) eine zur Verarbeitung der seriellen Steuersignale geeignete elektronische Busstation (57) zugeordnet ist, derart, dass die zum gleichen Betätigungskanalnetz (36) gehörenden Absperrventile (43) unabhängig voneinander über ein und denselben Steuerleitungsstrang (52) ansteuerbar sind.

14. Ventilanordnung nach einem der Ansprüche 1 bis 13, **dadurch gekennzeichnet, dass** jeder Ventilblock (5) in ein das Quetschventil (18) enthaltendes Arbeitsmodul (58) und ein daran angebautes, die für die gegenseitige fluidische Vernetzung der Ventilblöcke (5) verantwortlichen Bestandteile des Betätigungskanalnetzes (36, 36a, 36b, 36c) enthaltendes Steuermodul (59) unterteilt ist.

15. Ventilanordnung nach Anspruch 14 in Verbindung mit Anspruch 12 oder 13, **dadurch gekennzeichnet, dass** die den Steuerleitungsstrang (52) bildenden elektrischen Steuerleitungen (53) in den Steuermodulen (59) der Ventilblöcke (5) angeordnet sind.

16. Ventilanordnung nach einem der Ansprüche 1 bis 15, **dadurch gekennzeichnet, dass** an mindestens einen der beiden die Reihe von Ventilblöcken (5) abschließenden Ventilblöcke (5) ein zweckmäßigerweise kein Quetschventil (18) aufweisender Anschlussblock (14) angebaut oder anbaubar ist, der eine der Anzahl der Betätigungskanalnetze (36, 36a, 36b, 36c) entsprechende Anzahl von Fluidanschlüssen (38, 38a, 38b, 38c) aufweist, die jeweils mit einem der Betätigungskanalnetze (36, 3₆a, 36b, 36c) kommunizieren, wobei der Anschlussblock (14) bei einer Ausgestaltung der Absperrventile (43) als elektrisch betätigbare Absperrventile zweckmäßigerweise auch elektrische Schnittstellenmittel (56) zur Einspeisung elektrischer Steuersignale für die Absperrventile (43) aufweist.

## Claims

1. Valve assembly comprising a plurality of valve blocks (5) which are or can be lined up in a line-up direction (3) and each of which comprises a pinch valve (18) having a valve member (23) located between a medium inlet (26) and a medium outlet (27) of the associated valve block (5) and deformable by fluid pressure, at least one actuating passage (33, 33a, 33b, 33c) communicating with an actuating chamber (32) of the pinch valve (18) for the fluidic actuation of the valve member (23) extending in each valve block (5), **characterised in that** the valve blocks (5), while forming a valve block group (6), are or can be attached to one another with mounting surfaces (8a, 8b) facing one another in the line-up direction (3), wherein at least one actuating passage network (36, 36a, 36b, 36c) made up of individual actuating passages (33, 33a, 33b, 33c) of the valve blocks (5) communicating with one another in the region of the mounting surfaces (8a, 8b) passes through the valve block group (6), wherein, for each actuating passage network (36, 36a, 36b, 36c), a shutoff valve (43) by which the fluid connection to the actuating chamber (32) of the associated pinch valve (18) can optionally be opened or blocked without interrupting the fluidic interconnection of the valve blocks (5) effected by the associated actuating passage network (36, 36a, 36b, 36c) is installed into each actuating passage (33, 33a, 33b, 33c) of each valve block (5).

2. Valve assembly according to claim 1, **characterised in that** the valve member (23) is designed as a tubular body (25) capable of rubber-elastic deformation.

3. Valve assembly according to claim 1 or 2, **characterised in that** the valve member (23) is surrounded by the actuating chamber (32) and can be actuated directly by an actuating fluid which can be fed into the actuating chamber (32).

4. Valve assembly according to any of claims 1 to 3, **characterised in that** each individual actuating passage (33, 33a, 33b, 33c) comprises a through-passage (44) extending between oppositely oriented mounting surfaces (8a, 8b) of the associated valve block (5) and a branch passage (45) branching off the through-passage (44) and leading to the actuating chamber (32) of the associated pinch valve (18), the shutoff valve (43) being assigned to the branch passage (45) in such a way that it can open or block the branch passage (45) depending on its switching position, while the through-passage (44) is permanently open irrespective of the switching position of the shutoff valve (43).

5. Valve assembly according to any of claims 1 to 4, **characterised in that** valve blocks (5) of the valve block group (6) which are arranged directly adjacent to one another in the line-up direction (3) are mechanically connected to one another in pairs independently of the other valve blocks (5).

6. Valve assembly according to any of claims 1 to 5, **characterised in that** the valve block group (6) is equipped with precisely one actuating passage network (38).

7. Valve assembly according to any of claims 1 to 5, **characterised in that** the valve block group (6) is equipped with a plurality of actuating passage networks (36, 36a, 36b, 36c) which are functionally parallel-connected.

8. Valve assembly according to claim 7, **characterised in that** the valve block group (6) has a number of actuating passage networks (36, 36a, 36b, 36c) which corresponds to the number of valve blocks (5).

9. Valve assembly according to claim 7 or 8, **characterised in that** actuating passages (33, 33a, 33b, 33c) of the plurality of actuating passage networks (36, 36a, 36b, 36c) which are formed in the same valve block (5) are fluidically interconnected via the actuating chamber (32) of the associated pinch valve (18).

10. Valve assembly according to any of claims 1 to 9, **characterised in that** the shutoff valves (43) are designed for manual and/or electric actuation.

11. Valve assembly according to any of claims 1 to 10, **characterised in that** the shutoff valves (43) are of a bistable type and remain releasably in the respectively set switching position.

12. Valve assembly according to any of claims 1 to 11, **characterised in that** the shutoff valves (43) of at least one actuating passage network (38) are designed for electric actuation and connected to at least one electric control line strand (52) made up of electric control lines (53) of the individual valve blocks (5) which are connected to one another in the region of the mounting surfaces (8a, 8b) of the valve blocks (5).

13. Valve assembly according to claim 12, **characterised in that** at least one control line strand (52) is designed as a bus strand suitable and used for the transmission of serial control signals, wherein an electronic bus station (57) suitable for processing the serial control signals is expediently assigned to each shutoff valve (43) in such a way that the shutoff valves (43) belonging to the same actuating passage network (36) can be selected independently of one another by one and the same control line strand (52).

14. Valve assembly according to any of claims 1 to 13, **characterised in that** each valve block (5) is divided into a working module (58) which contains the pinch valve (18) and a control module (59) which is attached to the former and contains the components of the actuating passage network (36, 36a, 36b, 36c) which are responsible for the fluidic interconnection of the valve blocks (5).

15. Valve assembly according to claim 14 in combination with claim 12 or 13, **characterised in that** the electric control lines (53) forming the control line strand (52) are located in the control modules (59) of the valve blocks (5).

16. Valve assembly according to any of claims 1 to 15, **characterised in that** a connecting block (14) which expediently does not contain a pinch valve (18) and which has a number of fluid ports (38, 38a, 38b, 38c) corresponding to the number of actuating passage networks (36, 36a, 36b, 36c), each of which fluid ports (38, 38a, 38b, 38c) communicates with one of the actuating passage networks (36, 36a, 36b, 36c), is or can be attached to at least one of the two valve blocks (5) terminating the row of valve blocks (5), wherein the connecting block (14), if the shutoff valves (43) are designed as electrically actuated shutoff valves, expediently also comprises electric interfacing means (56) for the feed-in of electric control signals for the shutoff valves (43).

## Revendications

1. Ensemble de vannes, comprenant plusieurs blocs à vannes (5), qui sont alignés ou peuvent être alignés dans un sens d'alignement (3) et qui présentent respectivement une vanne à manchon (18), qui présente un organe de vanne (23) disposé entre une entrée de milieux (26) et une sortie de milieux (27) du bloc à vannes (5) associé, pouvant être déformé par la force de fluide, sachant qu'au moins un canal d'actionnement (33, 33a, 33b, 33c) communiquant avec une chambre d'actionnement (32) de la vanne à manchon (18) en vue de l'actionnement fluidique de l'organe de vanne (23) s'étend dans chaque bloc à vannes (5), **caractérisé en ce que** les blocs à vannes (5) sont installés ou peuvent être installés les uns contre les autres en formant un groupe de blocs à vannes (6) avec des surfaces de montage (8a, 8b) tournées les unes vers les autres dans le sens d'alignement (3), sachant que le groupe de blocs à vannes (6) est traversé par au moins un réseau de canaux d'actionnement (36, 36a, 36b, 36c), qui se compose de canaux d'actionnement (33, 33a, 33b, 33c) individuels, communiquant les uns avec les autres dans la zone des surfaces de montage (8a, 8b), des blocs à vannes (5), sachant qu'est insérée, par réseau de canaux d'actionnement (36, 36a, 36b, 36c), dans chaque canal d'actionnement (33, 33a, 33b, 33c) de chaque bloc à vannes (5), une vanne d'arrêt (43), par laquelle la liaison fluidique menant à la chambre d'actionnement (32) de la vanne à manchon (18) associée peut être au choix débloquée ou bloquée sans interrompre la mise en réseau fluidique des blocs à vannes (5) entre eux, entraînée par le réseau de canaux d'actionnement (36, 36a, 36b, 36c) associé.

2. Ensemble de vannes selon la revendication 1, **caractérisé en ce que** l'organe de vanne (23) est réalisé sous la forme d'un corps flexible (25) déformable de manière élastique comme le caoutchouc.

3. Ensemble de vannes selon la revendication 1 ou 2, **caractérisé en ce que** l'organe de vanne (23) est entouré par la chambre d'actionnement (32) et peut être actionné directement par un fluide d'actionnement pouvant être injecté dans la chambre d'actionnement (32).

4. Ensemble de vannes selon l'une quelconque des revendications 1 à 3, **caractérisé en ce que** chaque canal d'actionnement (33, 33a, 33b, 33c) individuel présente un canal de passage (44) s'étendant entre des surfaces de montage (8a, 8b), orientées les unes par rapport aux autres de manière opposée, du bloc à vannes (5) associé et un canal d'embranchement (45) déviant du canal du passage (44) et menant à la chambre d'actionnement (32) de la vanne à manchon (18) associée, sachant que la vanne d'arrêt (43) est associée au canal d'embranchement (45) de telle manière qu'elle peut débloquer ou bloquer ledit canal d'embranchement (45) selon la position de commutation, sachant que le canal de passage (44) est ouvert en permanence indépendamment de la position de commutation de la vanne d'arrêt (43).

5. Ensemble de vannes selon l'une quelconque des revendications 1 à 4, **caractérisé en ce que** des blocs à vannes (5), disposés directement de manière adjacente les uns par rapport aux autres dans le sens d'alignement (3), du groupe de blocs à vannes (6) sont reliés par paire, de manière mécanique, les uns aux autres, indépendamment des autres blocs à vannes (5).

6. Ensemble de vannes selon l'une quelconque des revendications 1 à 5, **caractérisé en ce que** le groupe de blocs à vannes (6) est pourvu de précisément un réseau de canaux d'actionnement (38).

7. Ensemble de vannes selon l'une quelconque des revendications 1 à 5, **caractérisé en ce que** le groupe de blocs à vannes (6) est pourvu de plusieurs réseaux de canaux d'actionnement (36, 36a, 36b, 36c) montés en parallèle de manière fonctionnelle.

8. Ensemble de vannes selon la revendication 7, **caractérisé en ce que** le groupe de blocs à vannes (6) présente un nombre de réseaux de canaux d'actionnement (36, 36a, 36b, 36c) correspondant au nombre de blocs à vannes (5).

9. Ensemble de vannes selon la revendication 7 ou 8, **caractérisé en ce que** des canaux d'actionnement (33, 33a, 33b, 33c), réalisés dans le même bloc à vannes (5), des nombreux réseaux de canaux d'actionnement (36, 36a, 36b, 36c) sont mis en réseau les uns avec les autres de manière fluidique au-delà de la chambre d'actionnement (32) de la vanne à manchon (18) associée.

10. Ensemble de vannes selon l'une quelconque des revendications 1 à 9, **caractérisé en ce que** les vannes d'arrêt (43) sont réalisées de manière à pouvoir être actionnées de manière manuelle et/ou de manière électrique.

11. Ensemble de vannes selon l'une quelconque des revendications 1 à 10, **caractérisé en ce que** les vannes d'arrêt (43) sont du type bistable et se maintiennent de manière amovible dans la position de commutation respectivement réglée.

12. Ensemble de vannes selon l'une quelconque des revendications 1 à 11, **caractérisé en ce que** les vannes d'arrêt (43) d'au moins un réseau de canaux d'actionnement (38) sont réalisées de manière à pouvoir être actionnées de manière électrique et sont raccordées à au moins une barre électrique de lignes de commande (52), qui se compose de lignes de commande (53) électriques, reliées les unes aux autres dans la zone des surfaces de montage (8a, 8b) des blocs à vannes (5), des divers blocs à vannes (5).

13. Ensemble de vannes selon la revendication 12, **caractérisé en ce qu'**au moins une barre de lignes de commande (52) est réalisée sous la forme d'une barre de bus adaptée et utilisée aux fins de la transmission de signaux de commande en série, sachant qu'une station de bus (57) électronique adaptée au traitement de signaux de commande en série est associée de manière appropriée à chaque vanne d'arrêt (43), de telle manière que les vannes d'arrêt (43) faisant partie du même réseau de canaux d'actionnement (36) peuvent être commandées indépendamment les unes des autres par l'intermédiaire d'une seule et même barre de lignes de commande (52).

14. Ensemble de vannes selon l'une quelconque des revendications 1 à 13, **caractérisé en ce que** chaque bloc à vannes (5) est divisé en un module de travail (58) contenant la vanne à manchon (18) et un module de commande (59) installé sur ledit module de travail et contenant les composants du réseau de canaux d'actionnement (36, 36a, 36b, 36c) en charge de la mise en réseau fluidique réciproque des blocs à vannes (5).

15. Ensemble de vannes selon la revendication 14 en lien avec la revendication 12 ou la revendication 13, **caractérisé en ce que** les lignes de commande (53) électriques formant la barre de lignes de commande (52) sont disposées dans les modules de commande (59) des blocs à vannes (5).

16. Ensemble de vannes selon l'une quelconque des revendications 1 à 15, **caractérisé en ce qu'**un bloc de raccordement (14) ne présentant de manière appropriée aucune vanne à manchon (18) est installé ou peut être installé au niveau au moins d'un des deux blocs à vannes (5) terminant la rangée de blocs à vannes (5), lequel bloc de raccordement présente un nombre de raccords de fluide (38, 38a, 38b, 38c) correspondant au nombre des réseaux de canaux d'actionnement (36, 36a, 36b, 36c), lesquels raccords de fluide communiquent respectivement avec l'un des réseaux de canaux d'actionnement (36, 36a, 36b, 36c), sachant que le bloc de raccordement (14) présente, lorsque les vannes d'arrêt (43) sont configurées sous la forme de vannes d'arrêt pouvant être actionnées de manière électrique, de manière appropriée également des moyens formant une interface (56) électriques servant à injecter des signaux de commande électriques pour les vannes d'arrêt (43).
